# EUROPEAN PATENT APPLICATION

(11) **EP 1 780 918 A1**
(43) Date of publication of application: **02.05.2007**
(21) Application number: 06122946.4
(22) Date of filing: 25.10.2006
(51) Int. Cl.: H04J 3/06, H04L 29/08

(54) **Method and system for providing clock synchronization over packet network**

(30) Priority: 25.10.2005 CN 200510114721
(71) Applicant: Huawei Technologies Co., Ltd., 518129 Longang District, Shenzehen (CN)
(72) Inventor: Qu, Zhijun, 518129, Shenzhen (CN)
(74) Representative: Viering, Jentschura & Partner

(57) **Abstract**

A method and a system for providing clock information synchronization over a packet network, including: a logic tree of clock synchronization is created in the IP packet network to form an IP clock synchronization network; clock information is converted into an IP data message by a clock gateway equipment, the IP data message is transmitted over the IP clock synchronization network by means of the created logic tree of clock synchronization, so that the clock information is transmitted to a packet network equipment. With the inventive methods and systems, clock synchronization information can be provided over the IP packet network without construction of a synchronization timing network, and the costs of network construction can be reduced. Furthermore, the embodiments of the present invention fully unify a data network and a circuit network and thereby make network maintenances easier and more convenient.

## Description

### Field of the present invention

The present invention relates to the communication field, particularly to a method and system for providing clock synchronization over a packet network.

### Background of the present invention

At present, it is a trend to provide services over a unified IP packet network; however, IP packet network has no connectivity or synchronization, and doesn't provide strict assurance for time delay and message transmission sequence. In contrast, traditional circuit services require timing and synchronization information; therefore, it is required to provide timing and synchronization information over IP packet network.

Currently, some solutions have proposed schemes for providing synchronization timing over IP packet network, including schemes that employ RTP protocol and ACM (Adaptive Clock Method) schema; however, those schemes only involve clock recovery techniques but don't describe how to provide timing throughout the IP network or how to implement switching and selection of clock synchronization information.

To meet a demand for providing circuit services over IP packet network, an existing technique related to the present invention is proposed, with the core idea as following: a synchronization timing network is constructed along with the IP packet network, and a superposition approach is adopted to meet the demand.

### Summary of the present invention

Embodiments of the present invention provide a method and system for providing clock synchronization over a packet network, and thus, clock synchronization information can be provided over the IP packet network without construction of a synchronization timing network, and the costs of network construction can be reduced. Furthermore, the embodiments of the present invention fully unify a data network and a circuit network and thereby make network maintenances easier and more convenient.

Accordingly, the embodiments of the present invention provide the following methods and system:

An embodiment of the present invention provides a method for providing clock synchronization information over a packet network, including:

A. creating a logic tree for clock synchronization in the IP packet network, to form an IP clock synchronization network;

B. converting, by a clock gateway equipment, clock information into an IP data message, and transmitting the IP data message over the IP clock synchronization network by means of the created logic tree of clock synchronization, to transmit the clock information to an equipment in the packet network.

Preferably, the step A may include:

A1. creating, in a multicast protocol or static mode, a multicast logic tree of clock synchronization in the IP packet network, to form an IP clock synchronization network;

or,

A2. creating, in a unicast protocol or static mode, a unicast logic tree of clock synchronization in the IP packet network, to form an IP clock synchronization network.

Preferably, the step B may comprise:

B 1. creating, by the clock gateway equipment, an IP data message to be forwarded at a fixed rate in accordance with a rate of clock information from a clock source, and encapsulating the IP data message with a multicast address, to create an IP clock information multicast message;

B2. forwarding the created IP clock information multicast message over the IP clock synchronization network by means of the created logic tree of clock synchronization to an access equipment in the IP packet network;

B3. upon receiving the IP clock multicast message, recovering, by the access equipment, the clock information from information carried in the IP clock information multicast message, and transmitting the recovered clock information to a terminal equipment;

or,

B4. creating, by the clock gateway equipment, an IP data message to be forwarded at a fixed rate in accordance with a rate of clock information from a clock source, and encapsulating the IP data message with a unicast address, to create an IP clock information unicast message;

B5. forwarding the created IP clock information unicast message over the IP clock synchronization network in a unicast mode by means of the logic tree of clock synchronization created in the IP packet network to an access equipment in the IP packet network;

B6. recovering, by the access equipment, the clock information from the unicast message, and transmitting the recovered clock information to a terminal equipment.

Preferably in step B3, the carried information may comprise clock rate information and/or a forwarding rate of the multicast message.

Preferably, the step B may further comprise:

B7. inputting clock information of a standby clock source into the clock gateway equipment;

B8. in the case that a primary clock source fails, locking, by the clock gateway equipment, the clock information of the standby clock source, creating an IP data message to be forwarded at a fixed rate in accordance with the rate of the locked clock information, and encapsulating the IP data message with a multicast address to create an IP clock information multicast message;

B9. forwarding the created IP clock information multicast message over the IP clock synchronization network by means of the logic tree of clock synchronization created in the packet network to an access equipment in the IP packet network;

B 10. upon receiving the IP clock multicast message, recovering, by the access equipment, the clock information from the IP clock information multicast message, and transmitting the recovered clock information to a terminal equipment;

or,

B 11. inputting clock information of a standby clock source into the clock gateway equipment;

B12. in the case that a primary clock source fails, locking, by the clock gateway equipment, the clock information of the standby clock source, creating an IP data message to be forwarded at a fixed rate in accordance with the rate of the clock information of the clock information, and encapsulating the IP data message with a unicast address to create an IP clock information unicast message;

B 13. forwarding the created IP clock information unicast message over the IP clock synchronization network in unicast mode by means of the logic tree of clock synchronization created in the IP packet network to an access equipment;

B14. recovering, by the access equipment, the clock information from the unicast message, and transmitting the recovered clock information to a terminal equipment.

Preferably, the step B may further comprise:

B 15. creating a standby logic tree of clock synchronization in the packet network;

B16. creating, by a standby clock gateway equipment, an IP data message to be forwarded at a fixed rate in accordance with a rate of clock information from a standby clock source, and encapsulating the IP data message with a multicast address, to create an IP clock information multicast message;

B 17. forwarding the created IP clock information multicast message over a standby IP clock synchronization network by means of the standby logic tree of clock synchronization created in the packet network to an access equipment in the IP packet network;

B 18. in the case that the access equipment detects a primary clock gateway equipment or a primary IP clock synchronization network has failed, receiving the IP clock information multicast message transmitted from the standby clock gateway equipment by means of the created standby logic tree of clock synchronization, and then recovering the standby clock information from the IP clock information multicast message, and transmitting the recovered clock information to a terminal equipment;

or,

B 19. creating a standby logic tree of clock synchronization in the packet network;

B20. creating, by a standby clock gateway equipment, an IP data message to be forwarded at a fixed rate in accordance with a rate of clock information from a standby clock source, and encapsulating the IP data message with a unicast address, to create an IP clock information unicast message;

B21. forwarding the created IP clock information unicast message in a unicast mode over a standby IP clock synchronization network by means of the standby logic tree of clock synchronization created in the IP packet network to an access equipment in the IP packet network;

B22. in the case that the access equipment detects a primary clock gateway equipment or a primary IP clock synchronization network has failed, receiving, by means of the created standby logic tree of clock synchronization, the IP clock information unicast message transmitted from the standby clock gateway equipment, and then recovering the clock information from the unicast message, and transmitting the recovered clock information to a terminal equipment.

Optionally, the step B may further comprise:

B23. creating, by a standby clock gateway equipment, an IP data message to be forwarded at a fixed rate in accordance with the rate of the clock information from the standby clock source, and encapsulating the IP data message with a multicast address, to create an IP clock information multicast message;

B24. forwarding the created IP clock information multicast message over the IP clock synchronization network by means of the logic tree of clock synchronization created in the packet network to an access equipment in the IP packet network;

B25. in the case that the access equipment detects a primary clock gateway equipment has failed, receiving the IP clock information multicast message transmitted from the standby clock gateway equipment by means of the created standby logic tree of clock synchronization, and then recovering the standby clock information from the IP clock information multicast message, and transmitting the recovered clock information to a terminal equipment.

or,

B26. creating, by the standby clock gateway equipment, an IP data message to be forwarded at a fixed rate in accordance with a rate of clock information from a standby clock source, and encapsulating the IP data message with a unicast address, to create an IP clock information unicast message;

B27. forwarding the created IP clock information unicast message over the IP clock synchronization network in a unicast mode by means of the logic tree of clock synchronization created in the IP packet network to an access equipment in the IP packet network;

B28. in the case that the access equipment detects a primary clock gateway equipment has failed, receiving the IP clock information unicast message transmitted from the standby clock gateway equipment by means of the created logic tree of clock synchronization, and then recovering the standby clock information from the IP clock information unicast message, and transmitting the recovered clock information to a terminal equipment.

Preferably, there may be the following step before the step B 18, B22, B25 or B28:

B29. after receiving a Keep Alive Report in the IP data message sent from the primary clock gateway equipment, detecting periodically, by the access equipment, whether the primary clock gateway equipment or the primary IP clock synchronization network has failed;

or,

B30. monitoring, by the clock synchronization message information inputted from the primary IP clock synchronization network, judging, by the access equipment, whether the primary clock gateway equipment or the primary IP clock synchronization network has failed.

Preferably, the step B29 may comprise:

B291. transmitting, by the primary clock gateway equipment, a Keep Alive Report to an access equipment by means of the created primary logic tree of clock synchronization;

B292. if the access equipment doesn't receive the message within a preset period, determining the logic link of the primary IP clock synchronization network or the primary clock gateway equipment has failed.

Preferably, the step B30 may comprise:

B301. monitoring, by the access equipment, whether there is clock information input from the primary IP clock synchronization network, and if there is clock information input, keeping the locked primary IP clock synchronization network; otherwise going to step B302;

B302. judging whether a clock information loss duration has exceeded a preset period; if the duration has exceeded the preset period, determining the logic link of the primary IP clock synchronization network or the primary clock gateway equipment has failed.

Preferably, the step B2, B9, B17 or B24 may comprise:

C1. forwarding, by the clock gateway equipment, the created IP clock information multicast message over the IP clock synchronization network to a core equipment of the IP packet network by means of the created logic tree of clock synchronization;

C2. copying, by the core equipment, the IP clock information multicast message to a converging equipment;

C3. forwarding, by the converging equipment, the IP clock information multicast message to an access equipment in the IP packet network.

Preferably, the step B5, B13, B21 or B27 may comprise:

D1. forwarding the created IP clock information unicast message in a unicast mode over the IP clock synchronization network to a core equipment in the IP packet network by means of the logic tree of clock synchronization created in the IP packet network;

D2. putting, by the core equipment, the IP clock information unicast message into a queue of the highest priority separately in accordance with a QoS level of the received message, processing the message in precedence, and forwarding the message to a converging equipment;

D3. forwarding, by the converging equipment, the IP clock information unicast message to an access equipment in the IP packet network.

Preferably in the step B3, B6, B10, B 14, B 18, B22, B25, or B28, the transmission of the recovered clock information to a terminal equipment may comprise:

transmitting, in a Network Time Reference (NTR) mode, a Synchronous Residual Time Stamp (SRTS), an Adaptive Clock Mechanism (ACM) or a line coding mode, the recovered clock information to a terminal equipment.

Another embodiment of the present invention provides a system for providing clock synchronization information over a packet network, the system comprising a clock source, a clock gateway equipment, and a packet network equipment;

a logic tree of clock synchronization may be created between the clock gateway equipment and the packet network equipment, to form an IP clock synchronization network;

the clock gateway equipment may be adapted to convert clock information of a clock source into an IP data message, and transmit the IP data message over the IP clock synchronization network, to transmit the clock information to a packet network equipment.

Preferably, the system may further comprise a standby clock source;

the clock information of the standby clock source may be locked through the clock gateway equipment in the case that the primary clock source fails.

Preferably, the system may further comprise a standby clock source and a standby clock gateway equipment;

the standby clock gateway equipment may be adapted to convert the clock information from the standby clock source into an IP data message, and in accordance with the message, transmit the clock information to a packet network equipment;

the normally working packet network equipment may be adapted to detect whether a primary clock gateway equipment has failed, and upon detection of a failure, receive the clock information transmitted from the standby clock gateway equipment, and perform clock information synchronization throughout the network with the clock information.

Preferably, the system may further comprise a standby clock source, a standby clock gateway equipment, and a standby packet network equipment;

a standby logic tree of clock synchronization may be established in a multicast/unicast protocol or static mode between the standby clock gateway equipment and the standby packet network equipment, to form a standby IP clock synchronization network;

the standby clock gateway equipment may be adapted to convert clock information of the standby clock source into an IP data message, encapsulate the IP data message into an IP clock information multicast/unicast message, and then transmit the message over the IP clock synchronization network, to transmit the clock information to the standby packet network equipment;

the normally working packet network equipment may be adapted to detect whether a primary IP clock synchronization network or a primary clock gateway equipment has failed, and upon detection of a failure, receive the clock information transmitted by means of the standby logic tree of clock synchronization from the standby clock gateway equipment, and perform clock information synchronization throughout the network with the clock information.

As can be seen from above, a logic tree of clock synchronization is created in the IP packet network to form an IP clock synchronization network; the clock information is converted into an IP data message by the clock gateway equipment, the IP data message is transmitted over the IP clock synchronization network by means of the created logic tree of clock synchronization, so that the clock information is transmitted to a packet network equipment. With the inventive methods and systems, clock synchronization information can be provided over the IP packet network without construction of a synchronization timing network, and the costs of network construction can be reduced. Furthermore, the embodiments of the present invention fully unify a data network and a circuit network and thereby make network maintenances easier and more convenient.

It is seen from the technical scheme provided in the present invention, a logic tree of clock synchronization is created in the IP packet network to form an IP clock synchronization network; the clock information is converted into an IP data message by the clock gateway equipment, the IP data message is transmitted over the IP clock synchronization network by means of the logic tree of created clock information synchronization, so that the clock information is transmitted to the packet network equipment. With the present invention, clock synchronization information can be provided over the IP packet network, without constructing a synchronization timing network; therefore, the present invention is helpful to reduce the costs of network construction; furthermore, the present invention unifies data network and circuit network completely and thereby makes network maintenances easier and more convenient.

### Brief Description of the Drawings

Fig.1 is a schematic diagram of the principle for a system according to an embodiment of the present invention;

Fig.2 is a schematic diagram of the principle for a system provided with a standby clock source according to an embodiment of the present invention;

Fig.3 is a schematic diagram of the principle for a system provided with a standby clock source and a standby clock synchronization gateway equipment according to an embodiment of the present invention;

Fig.4 is a flow diagram of a method according to an embodiment of the present invention;

Fig.5 shows a topological tree for clock synchronization over IP network in multicast mode according to an embodiment of the present invention;

Fig.6 shows a topological tree for clock synchronization over IP network in unicast mode according to an embodiment of the present invention; and

Fig.7 is a flow diagram of failure detection of equipment and clock information synchronization logic link according to an embodiment of the present invention.

### Detailed Description of the Embodiments

In view of the fact that the so-called clock synchronization information is originally not available in IP packet network, clock information synchronization network has to be emulated over IP packet network, in order to transmit clock information in emulated mode. Since the access equipment and the terminal equipments require the clock information, the access equipment has to lock the reference clock provided from the clock gateway equipment, and the access equipment and the clock gateway equipment logically form a tree topology. Therefore, the clock synchronization information can be transmitted in multicast mode, and the clock gateway equipment converts the clock synchronization information into an IP message, which is transmitted to the access equipment through a level-by-level duplication process. Upon receiving the IP message containing the clock information, the access equipment recovers the clock information therefrom, and then transmits in NTR mode or other mode the clock information to terminal equipments. In that way, synchronization of clock information throughout the network can be implemented. If the intermediate equipment in the IP packet network doesn't support multicast-mode duplication, the clock information can be forwarded in unicast mode to the access equipment. Upon receiving the IP message containing clock information, the access equipment recovers the clock information therefrom, and then transmits the clock information in NTR mode or other mode to the terminal equipments.

Based on the above principle, the embodiments of the present invention provide a method and system for providing clock synchronization over packet network, with the core idea as following: a logic tree of clock synchronization is created in the IP packet network to form an IP clock synchronization network; the clock information is converted by the clock gateway equipment into an IP data message which is transmitted by the created logic tree of clock synchronization over the IP clock synchronization network, so that the clock information is transmitted to an equipments in the packet network.

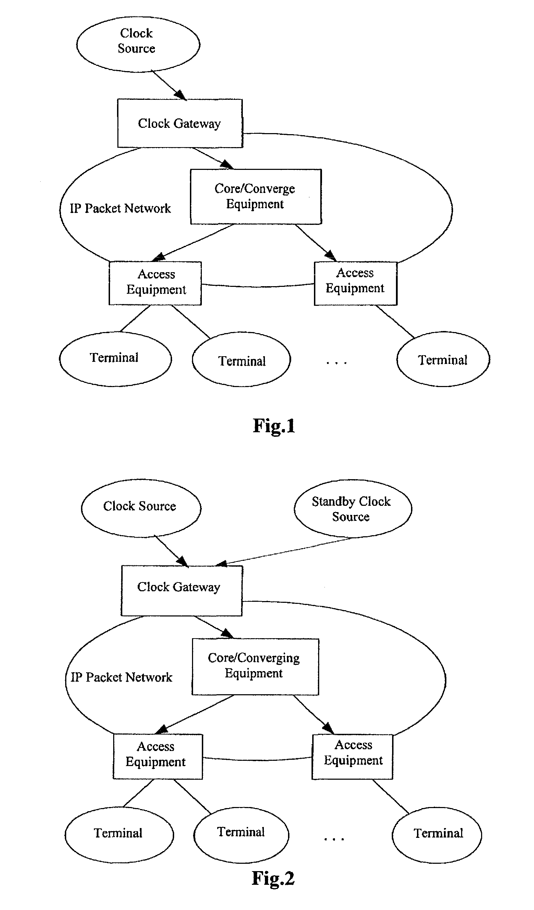

The first embodiment of the system described in the present invention is shown in Fig.1; wherein, the system includes clock source, clock gateway equipment and packet network equipment. Here, the packet network equipment includes core equipment, converging equipment, access equipment and terminal equipments.

With multicast/unicast protocol or static mode, a logic tree of clock synchronization is created between the clock gateway equipment and the packet network equipment to form an IP clock synchronization network;

The clock gateway equipment converts clock information of the clock source into an IP data message to be transmitted at a fixed rate, encapsulates the IP data message with the multicast address/unicast address to create an IP clock information multicast/unicast message, and then transmits the IP data message over the IP clock synchronization network by means of the created logic tree of clock synchronization, to transmit the clock information to the packet network equipment.

Since clock information has great effects to synchronous services, an embodiment of the present invention provides a scheme of backup and protective switching for IP packet clock information synchronization network, based on the above embodiment. The parts involved in backup include clock source, clock gateway equipment and IP packet clock information synchronization network. Hereinafter the backup of each part will be described:

A standby clock source needs to be added on the basis of the above embodiment, provided that only backup and protective switching for the clock source in the IP packet clock information synchronization network is to be implemented, as shown in Fig.2:

When the clock information from different clock information synchronization sources is input into the clock gateway equipment in the IP packet network, the clock gateway equipment will choose a clock source of higher level by means of a mechanism (e.g., SSM), lock the chosen clock source as the primary clock source, and transmits the clock information of the primary clock source to the respective equipments in the packet network, as described in the above embodiment.

In the case that the primary clock source fails, the clock gateway equipment locks the clock information of the standby clock source, creates an IP data message to be forwarded at a fixed rate in accordance with the rate of the locked clock information, and encapsulates the IP data message with the multicast/unicast address to create an IP clock information multicast/unicast message, and then forwards the created IP clock information message to the access equipment in the IP packet network over the IP clock synchronization network by means of the logic tree of clock synchronization created in the packet network.

Upon receiving the IP clock message, the access equipment recovers the clock information from the IP clock information message, and transmits the recovered clock information to the terminal equipments.

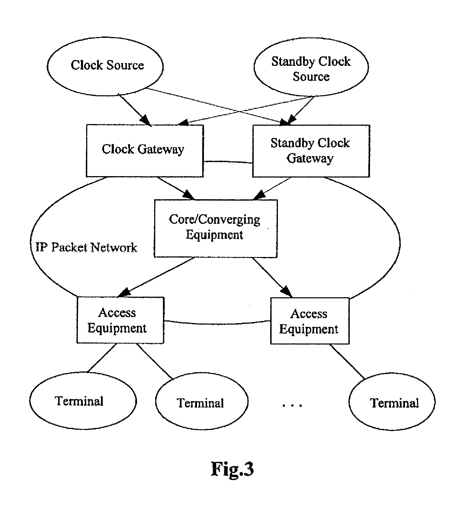

A standby clock source and a standby clock gateway equipment need to be added on the basis of the first embodiment, provided that the backup and protective switching for the clock gateway equipment in the IP packet network and the IP packet clock information synchronization network is to be implemented, as shown in Fig.3:

The standby clock gateway equipment is designed to convert clock information of the standby clock source into an IP data message to be transmitted at a fixed rate, encapsulate the IP data message with the multicast/unicast address to create an IP clock information multicast/unicast message, and then transmit the message over the IP clock synchronization network by means of the created clock information synchronization logic tree, to transmit the clock information to the packet network equipment.

In the case that the normally working packet network equipment detects that the primary clock gateway equipment has failed, it receives the clock information transmitted from the standby clock gateway equipment and performs clock information synchronization with the clock information.

A standby clock source, a standby clock gateway equipment, and packet network equipment need to be added on the basis of the first embodiment, provided that the backup and protective switching for the clock gateway equipment in the IP packet network and the IP packet clock information synchronization network is to be implemented.

In multicast protocol or static mode, a standby logic tree of clock synchronization is created between the standby clock gateway equipment and the standby packet network equipment in the standby packet network to form a standby IP clock synchronization network;

The standby clock gateway equipment converts the clock information from the standby clock source into an IP data message to be transmitted at a fixed rate, encapsulates the IP data message with the multicast/unicast address to create an IP clock information multicast/unicast message, and then transmits the message over the IP clock synchronization network by means of the created standby logic tree of clock synchronization, to transmits the clock information to the standby packet network equipment.

When the normally working packet network equipment detects that the primary IP clock synchronization network or the primary clock gateway equipment has failed, it receives the clock information transmitted from the standby clock gateway equipment and performs clock information synchronization with the clock information.

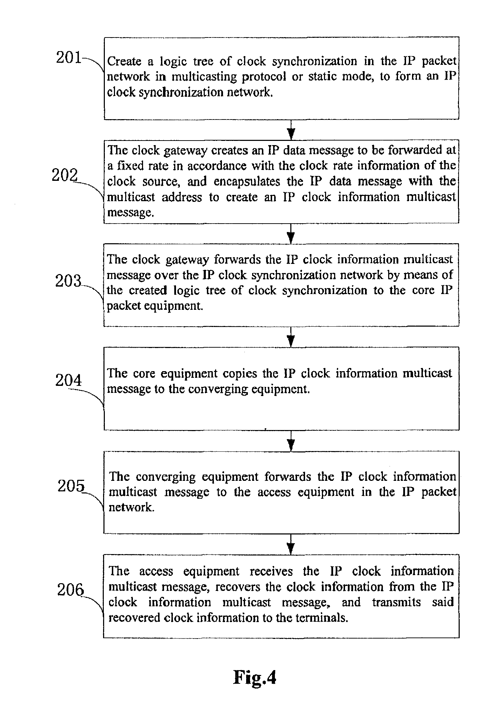

The present invention provides the second embodiment based on the method as described above, with the core idea as following: a logic tree of clock synchronization is created in the IP packet network to transmit the message in multicast mode, so as to transmit the clock synchronization information to the respective equipments in the packet network. The specific implementing procedures are shown in Fig.4, including the following steps:

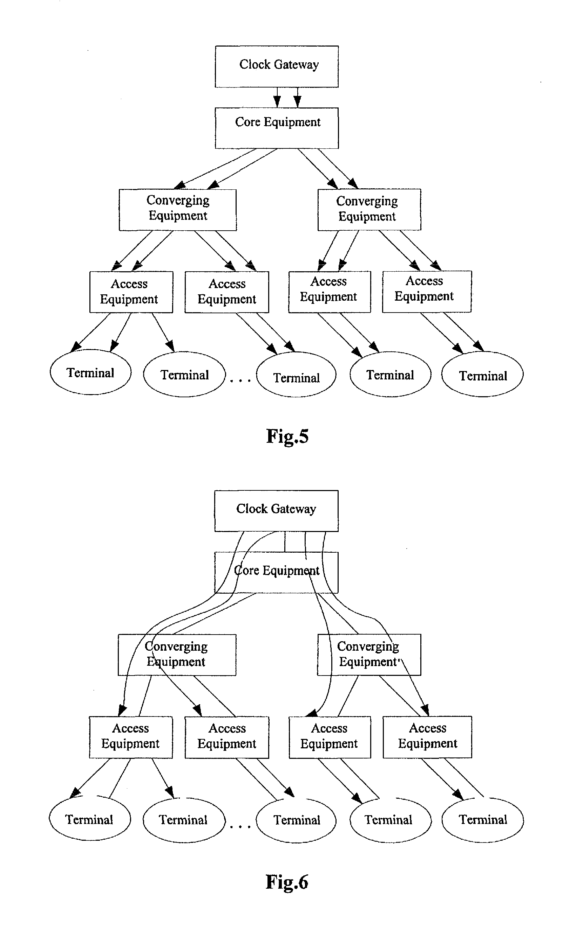

Step 201: as shown in Fig.5, in multicast protocol or static mode, a multicast logic tree of clock synchronization over IP packet network is created to form an IP clock synchronization network;

Step 202: the clock gateway equipment creates an IP data message to be forwarded at a fixed rate in accordance with the clock information from the clock source, and encapsulates the IP data message with a multicast address, to create an IP clock information multicast message;

Step 203: the clock gateway equipment forwards the created IP clock information multicast message over the IP clock synchronization network to the core equipment in the IP packet network by means of the created logic tree of clock synchronization;

Step 204: the core equipment copies the IP clock information multicast message to the converging equipment;

Step 205: the converging equipment forwards the IP clock information multicast message to the access equipment in the IP packet network;

Step 206: Upon receiving the IP clock information multicast message, the access equipment recovers the clock information in accordance with the information carried in the IP clock information multicast message (e.g., clock rate information and/or multicast message forwarding rate, etc.), and transmits the recovered clock information to the terminal equipments, such as voice devices or circuit devices, in Network Time Reference (NTR) mode or other mode (e.g., Synchronous Residual Time Stamp (SRTS), Adaptive Clock Mechanism (ACM) or line coding mode).

The present invention provides the third embodiment based on the method described as above, with the core idea as following: a logic tree of clock synchronization is created in the IP packet network to transmit the message in unicast mode, so as to transmit the clock synchronization information to the respective equipments in the packet network. The specific implementing procedures include:

Step 301: as shown in Fig.6, in unicast protocol or static mode, creates a unicast logic tree of clock synchronization over IP packet network, to form an IP clock synchronization network.

Step 302: the clock gateway equipment creates an IP data message to be forwarded at a fixed rate in accordance with the clock information from the clock source, and encapsulates the IP data message with a unicast address, to create an IP clock information unicast message;

Step 303: by means of the logic tree of clock synchronization created in the IP packet network, the created IP clock information unicast message is forwarded in unicast mode over the IP clock synchronization network to the core equipment in the IP packet network;

Step 304: the core equipment puts the IP clock information unicast message separately into the queue of the highest priority in accordance with QoS level of the received message, processes the message in precedence, and forwards the message to the converging equipment;

Step 305: the converging equipment forwards the IP clock information unicast message to the access equipment in the IP packet network;

Step 306: the access equipment recovers the clock information according to the features of the unicast message, and in NTR mode or other mode, transmits the recovered clock information to the terminal equipments (e.g., voice devices or circuit devices).

To add a backup mechanism, a primary clock source and a standby clock source are provided for consideration of the entire network; under normal condition, the primary clock gateway equipment locks a clock source of higher level as the primary clock source, and transmits in multicast or unicast mode the clock information of the primary clock to the access equipment. In the case that the primary clock source fails, the primary clock gateway equipment will lock the standby clock source automatically, and transmits in multicast or unicast mode the clock information to the access equipment, and transmits the clock source information (including clock level) to the access equipment. Here, the switching between the clock sources doesn't affect the switching of multicast tree or unicast tree.

The fourth embodiment according to the present invention is implemented with addition of a backup mechanism on the basis of the second embodiment, with the core idea as following: with addition of a standby clock source, clock information synchronization for the equipment in packet network can be implemented with the clock information from the standby clock source in the case that the primary clock source fails.

Hereinafter only the differences from the second embodiment will be described:

The following steps are added on the basis of the second embodiment:

Step 401: the clock information of the standby clock source is input into the primary clock gateway equipment;

Step 402: in the case that the primary clock source fails, the primary clock gateway equipment locks the clock information of the standby clock source, creates an IP data message to be forwarded at a fixed rate in accordance with the rate of the locked clock information, and encapsulates the IP data message with the multicast address to create an IP clock information multicast message;

Step 403: by means of the logic tree of clock synchronization created in the packet network, the created IP clock information multicast message is forwarded over the IP clock synchronization network to the access equipment in the IP packet network;

Step 404: after receiving the IP clock information multicast message, the access equipment recovers the clock information from the IP clock information multicast message and transmits the recovered clock information to the terminal equipments (e.g., voice devices or circuit devices).

The fifth embodiment according to the present invention is implemented with addition of a backup mechanism on the basis of the third embodiment, with the core idea as following: with addition of a standby clock source, clock information synchronization for the equipment in packet network can be implemented with the clock information from the standby clock source in the case that the primary clock source fails. Hereinafter only the differences from the third embodiment will be described:

The following steps are added on the basis of the third embodiment:

Step 501: the clock information of the standby clock source is input into the primary clock gateway equipment;

Step 502: in the case that the primary clock source fails, the primary clock gateway equipment locks the clock information of the standby clock source, creates an IP data message to be forwarded at a fixed rate in accordance with the rate of the clock information of the clock source, and encapsulates the IP data message with the unicast address to create an IP clock information unicast message;

Step 503: by means of the logic tree of clock synchronization created in the IP packet network, the created IP clock information unicast message is forwarded in unicast mode over the IP clock synchronization network to the access equipment;

Step 504: the access equipment recovers the clock information according to the features of the unicast message, and transmits the recovered clock information to the terminal equipments, such as voice devices or circuit devices.

The sixth embodiment according to the present invention is implemented with addition of a backup mechanism on the basis of the second embodiment, with the core idea as following: with addition of a standby clock source and a standby clock synchronization gateway equipment, the system will switch to the standby clock synchronization network in the case that the primary clock synchronization gateway equipment fails, and thus utilize the standby clock synchronization gateway equipment to lock the clock information of the standby clock source, and by means of the created logic tree of clock synchronization, transmit the clock information from the standby clock to the respective equipments in the packet network, so as to implement clock information synchronization for the equipments in the packet network.

The following steps are added on the basis of the second embodiment:

Step 601: the standby clock gateway equipment creates an IP data message to be forwarded at a fixed rate in accordance with the rate of the clock information from the standby clock source, and encapsulates the IP data message with the multicast address, to create an IP clock information multicast message;

Step 602: by means of the logic tree of clock synchronization created in the packet network, the created IP clock information multicast message is forwarded over the IP clock synchronization network to the access equipment in the IP packet network;

Next, the operations for the access equipment to detect whether the primary clock gateway equipment has failed are performed in either of the two modes:

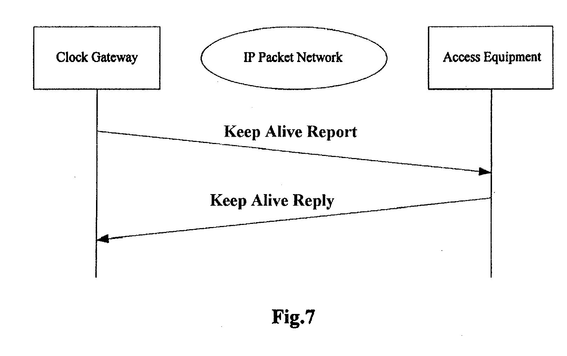

The first mode employs a Keep Alive approach similar to PPP service to periodically detect the clock gateway equipment. Here, the access equipment in the packet network utilizes the Keep Alive Report in the IP data message sent from the primary clock gateway equipment to periodically detect whether the primary clock gateway equipment has failed. As shown in Fig.7, under normal condition, the primary clock gateway equipment will send a Keep Alive Report to the access equipment, and this message can be carried in the IP clock information multicast/unicast message in the same way as the clock information message. When the access equipment receives the Keep Alive Report, it can choose to respond to the message or not respond to it, dependent upon how the access equipment has been configured. If the access equipment doesn't receive the Keep Alive Report sent from the primary clock gateway equipment within a configurable period, the access equipment will determine that the primary logic link in the IP clock synchronization network or the primary clock gateway equipment has failed and thus is unable to provide clock information, and in this case, the access equipment will choose to receive the other clock multicast/unicast tree to receive clock information message, and thus switch to the standby IP clock synchronization network.

The specific implementing procedures include:

Step 603: the primary clock gateway equipment transmits the Keep Alive Report to the access equipment by means of the created primary logic tree of clock synchronization;

Step 604: if the access equipment doesn't receive the message within a preset period, it determines the logic link of the primary IP clock synchronization network or the primary clock gateway equipment has failed.

In the second mode, the access equipments in the packet network monitors the clock synchronization information inputted from the primary IP clock synchronization network, and utilizes the information to judge whether the primary clock gateway equipment or the primary IP clock synchronization network has failed. This mode treats failures of both the clock gateway equipment and the IP clock information synchronization logic network in the same way, and decides whether to switch the locked clock input source monitoring, by the clock input information. The specific implementing procedures include:

Step 605: the access equipment monitors whether there is clock information input over the primary IP clock synchronization network, and if there is clock information input, it keeps the locked primary IP clock synchronization network; otherwise it executes step 606;

Step 606: it judges whether the duration of the clock information being lost has exceeded a preset period; if the duration has exceeded, it determines that the primary clock gateway equipment or the logic link of the primary IP clock synchronization network has failed; otherwise repeating step 606;

In the case that the access equipment detects the primary clock gateway equipment fails, it receives the IP clock information multicast message transmitted from the standby clock gateway equipment by means of the created logic tree of clock synchronization, and then recovers the standby clock information from the IP clock information multicast message and transmits the recovered clock information to the terminal equipments. Specifically, the step include the following steps:

Step 607: in the case that the access equipment detects the primary clock gateway equipment has failed, it receives, by means of the created logic tree of clock synchronization, the IP clock information multicast message transmitted from the standby clock gateway equipment, and then recovers the standby clock information from the IP clock information multicast message, and transmits the recovered clock information to the terminal equipments.

The seventh embodiment according to the present invention is implemented with addition of a backup mechanism based on the second embodiment, with the core idea as following: with addition of standby clock source, standby clock synchronization gateway equipment and standby packet network equipment, standby multicast logic tree of clock synchronization is created, to form standby clock synchronization network. Thus, in the case that the primary clock synchronization gateway equipment fails, the system will switch to the standby clock synchronization network and utilize the standby clock synchronization gateway equipment to lock clock information from the standby clock source, and transmit, by means of the standby logic tree of clock synchronization, the clock information from the standby clock source to the respective equipments in the packet network, thereby implementing clock information synchronization for the equipments in the packet network.

The following steps are added on the basis of the second embodiment:

Step 705: a standby logic tree of clock synchronization is created in the packet network;

Step 706: the standby clock gateway equipment creates an IP data message to be forwarded at a fixed rate in accordance with the rate of the clock information from the standby clock source, and encapsulates the IP data message with the multicast address, to create an IP clock information multicast message;

Step 707: by means of the standby logic tree of clock synchronization created in the packet network, the created IP clock information multicast message is forwarded over the IP clock synchronization network to the access equipment in the IP packet network;

Next, the operations for the access equipment to detect whether the primary clock gateway equipment has failed are performed, which are identical to those in the sixth embodiment and will not be described in detail here.

In the case that the access equipment detects the primary clock gateway equipment or the primary IP clock synchronization network has failed, it receives, by means of the created standby logic tree of clock synchronization, the IP clock information multicast message transmitted from the standby clock gateway equipment, and then recovers the standby clock information from the IP clock information multicast message, and transmits the recovered clock information to the terminal equipments by means of the standby logic tree of clock synchronization. Specifically, the step includes the following steps:

Step 708: in the case that the access equipment detects the primary clock gateway equipment or the primary clock synchronization network has failed, it receives, by means of the created standby logic tree of clock synchronization, the IP clock information multicast message transmitted from the standby clock gateway equipment, and then recovers the standby clock information from the IP clock information multicast message, and transmits the recovered clock information to the terminal equipments.

The eight embodiment according to the present invention is implemented with addition of a backup mechanism on the basis of the third embodiment, with the core idea as following: with addition of a standby clock source and a standby clock synchronization gateway equipment, the system will switch to the standby clock synchronization network in the case that the primary clock synchronization gateway equipment fails, and thus utilize the standby clock synchronization gateway equipment to lock the clock information of the standby clock source, and transmit the standby clock information to the equipments in the packet network by means of the created logic tree of clock synchronization, so as to implement clock information synchronization for the equipments in the packet network.

The following steps are added on the basis of the third embodiment:

Step 801: the standby clock gateway equipment creates an IP data message to be forwarded at a fixed rate in accordance with the rate of the clock information from the standby clock source, and encapsulates the IP data message with the unicast address, to create an IP clock information unicast message;

Step 802: by means of the logic tree of clock synchronization created in the IP packet network, the IP clock information unicast message is forwarded in unicast mode over the IP clock synchronization network to the access equipment in the IP packet network;

Next, the operations for the access equipment to detect whether the primary clock gateway equipment has failed are performed, which are identical to those in the sixth embodiment and will not be described in detail here.

In the case that the access equipment detects the primary clock gateway equipment has failed, it receives, by means of the created logic tree of clock synchronization, the IP clock information unicast message transmitted from the standby clock gateway equipment, and then recovers the standby clock information from the IP clock information unicast message, and transmits the recovered clock information to the terminal equipments. Specifically, the step includes the following steps:

Step 803: in the case that the access equipment detects the primary clock gateway equipment has failed, it receives, by means of the created logic tree of clock synchronization, the IP clock information unicast message transmitted from the standby clock gateway equipment, and then recovers the clock information according to the IP clock information unicast message, and transmits the recovered clock information to the terminal equipments.

The ninth embodiment according to the present invention is implemented with addition of a backup mechanism based on the third embodiment, with the core idea as following: with addition of standby clock source, standby clock synchronization gateway equipment and standby packet network equipment, standby unicast logic tree of clock synchronization is created to form standby clock synchronization network. Thus, in the case that the primary clock synchronization gateway equipment fails, the system will switch to the standby clock synchronization network and utilize the standby clock synchronization gateway equipment to lock clock information from the standby clock source, and transmit the clock information from the standby clock source to the equipments in the packet network by means of the standby logic tree of clock synchronization in the standby clock synchronization network, so as to implement clock information synchronization for the equipments in the packet network.

The following steps are added on the basis of the third embodiment:

Step 905: a standby logic tree of clock synchronization is created in the packet network;

Step 906: the standby clock gateway equipment creates an IP data message to be forwarded at a fixed rate in accordance with the rate of the clock information from the standby clock source, and encapsulates the IP data message with the unicast address, to create an IP clock information unicast message;

Step 907: by means of the logic tree of clock synchronization created in the IP packet network, the IP clock information unicast message is forwarded in unicast mode over the IP clock synchronization network to the access equipment in the IP packet network.

Next, the operations for the access equipment to detect whether the primary clock gateway equipment has failed are performed, which are identical to those in the sixth embodiment and will not be described in detail here.

In the case that the access equipment detects the primary clock gateway equipment or the primary clock synchronization network fails, it receives, by means of the created standby logic tree of clock synchronization, the IP clock information unicast message transmitted from the standby clock gateway equipment, and then recovers the standby clock information from the IP clock information unicast message, and transmits the recovered clock information to the terminal equipments by means of the standby logic tree of clock synchronization. Specifically, the step includes the following steps:

Step 908: in the case that the access equipment detects the primary clock gateway equipment or the primary clock synchronization network has failed, it receives by means of the created standby logic tree of clock synchronization, the IP clock information unicast message transmitted from the standby clock gateway equipment, and then recovers the clock information from the IP clock information unicast message, and transmits the recovered clock information to the terminal equipments.

As can be seen from above, a logic tree of clock synchronization is created in the IP packet network to form an IP clock synchronization network; the clock information is converted into an IP data message by the clock gateway equipment, the IP data message is transmitted over the IP clock synchronization network by means of the created logic tree of clock synchronization, so that the clock information is transmitted to a packet network equipment. With the inventive methods and systems, clock synchronization information can be provided over the IP packet network without construction of a synchronization timing network, and the costs of network construction can be reduced. Furthermore, the embodiments of the present invention fully unify a data network and a circuit network and thereby make network maintenances easier and more convenient.

While the present invention has been described and illustrated with reference to the embodiments thereof and the drawings, it shall be recognized by those skilled in the art that those embodiments and drawings are merely illustrative and not restrictive, that the present invention shall be not limited thereto, and that various modifications and variations can be made thereto in light of the descriptions and the drawings without departing from the sprit and scope of the present invention as defined by the accompanying claims.

## Claims

1. A method for providing clock synchronization information over a packet network, comprising:
A. creating a logic tree for clock synchronization in the IP packet network, to form an IP clock synchronization network;
B. converting, by a clock gateway equipment, clock information into an IP data message, and transmitting the IP data message over the IP clock synchronization network by means of the created logic tree of clock synchronization, to transmit the clock information to an equipment in the packet network.

2. The method according to claim 1, wherein the step A comprises:
A1. creating, in a multicast protocol or static mode, a multicast logic tree of clock synchronization in the IP packet network, to form an IP clock synchronization network;
or,
A2. creating, in a unicast protocol or static mode, a unicast logic tree of clock synchronization in the IP packet network, to form an IP clock synchronization network.

3. The method according to claim 1, wherein the step B comprises:
B 1. creating, by the clock gateway equipment, an IP data message to be forwarded at a fixed rate in accordance with a rate of clock information from a clock source, and encapsulating the IP data message with a multicast address, to create an IP clock information multicast message;
B2. forwarding the created IP clock information multicast message over the IP clock synchronization network by means of the created logic tree of clock synchronization to an access equipment in the IP packet network;
B3. upon receiving the IP clock multicast message, recovering, by the access equipment, the clock information from information carried in the IP clock information multicast message, and transmitting the recovered clock information to a terminal equipment;
or,
B4. creating, by the clock gateway equipment, an IP data message to be forwarded at a fixed rate in accordance with a rate of clock information from a clock source, and encapsulating the IP data message with a unicast address, to create an IP clock information unicast message;
B5. forwarding the created IP clock information unicast message over the IP clock synchronization network in a unicast mode by means of the logic tree of clock synchronization created in the IP packet network to an access equipment in the IP packet network;
B6. recovering, by the access equipment, the clock information from the unicast message, and transmitting the recovered clock information to a terminal equipment.

4. The method according to claim 3, wherein in step B3, the carried information comprises clock rate information and/or a forwarding rate of the multicast message.

5. The method according to claim 1, wherein the step B further comprises:
B7. inputting clock information of a standby clock source into the clock gateway equipment;
B8. in the case that a primary clock source fails, locking, by the clock gateway equipment, the clock information of the standby clock source, creating an IP data message to be forwarded at a fixed rate in accordance with the rate of the locked clock information, and encapsulating the IP data message with a multicast address to create an IP clock information multicast message;
B9. forwarding the created IP clock information multicast message over the IP clock synchronization network by means of the logic tree of clock synchronization created in the packet network to an access equipment in the IP packet network;
B10. upon receiving the IP clock multicast message, recovering, by the access equipment, the clock information from the IP clock information multicast message, and transmitting the recovered clock information to a terminal equipment;
or,
B11. inputting clock information of a standby clock source into the clock gateway equipment;
B12. in the case that a primary clock source fails, locking, by the clock gateway equipment, the clock information of the standby clock source, creating an IP data message to be forwarded at a fixed rate in accordance with the rate of the clock information of the clock information, and encapsulating the IP data message with a unicast address to create an IP clock information unicast message;
B13. forwarding the created IP clock information unicast message over the IP clock synchronization network in unicast mode by means of the logic tree of clock synchronization created in the IP packet network to an access equipment;
B14. recovering, by the access equipment, the clock information from the unicast message, and transmitting the recovered clock information to a terminal equipment.

6. The method according to claim 1, wherein, the step B further comprises:
B 15. creating a standby logic tree of clock synchronization in the packet network;
B 16. creating, by a standby clock gateway equipment, an IP data message to be forwarded at a fixed rate in accordance with a rate of clock information from a standby clock source, and encapsulating the IP data message with a multicast address, to create an IP clock information multicast message;
B17. forwarding the created IP clock information multicast message over a standby IP clock synchronization network by means of the standby logic tree of clock synchronization created in the packet network to an access equipment in the IP packet network;
B 18. in the case that the access equipment detects a primary clock gateway equipment or a primary IP clock synchronization network has failed, receiving the IP clock information multicast message transmitted from the standby clock gateway equipment by means of the created standby logic tree of clock synchronization, and then recovering the standby clock information from the IP clock information multicast message, and transmitting the recovered clock information to a terminal equipment;
or,
B 19. creating a standby logic tree of clock synchronization in the packet network;
B20. creating, by a standby clock gateway equipment, an IP data message to be forwarded at a fixed rate in accordance with a rate of clock information from a standby clock source, and encapsulating the IP data message with a unicast address, to create an IP clock information unicast message;
B21. forwarding the created IP clock information unicast message in a unicast mode over a standby IP clock synchronization network by means of the standby logic tree of clock synchronization created in the IP packet network to an access equipment in the IP packet network;
B22. in the case that the access equipment detects a primary clock gateway equipment or a primary IP clock synchronization network has failed, receiving, by means of the created standby logic tree of clock synchronization, the IP clock information unicast message transmitted from the standby clock gateway equipment, and then recovering the clock information from the unicast message, and transmitting the recovered clock information to a terminal equipment.

7. The method according to claim 1, wherein the step B further comprises:
B23. creating, by a standby clock gateway equipment, an IP data message to be forwarded at a fixed rate in accordance with the rate of the clock information from the standby clock source, and encapsulating the IP data message with a multicast address, to create an IP clock information multicast message;
B24. forwarding the created IP clock information multicast message over the IP clock synchronization network by means of the logic tree of clock synchronization created in the packet network to an access equipment in the IP packet network;
B25. in the case that the access equipment detects a primary clock gateway equipment has failed, receiving the IP clock information multicast message transmitted from the standby clock gateway equipment by means of the created standby logic tree of clock synchronization, and then recovering the standby clock information from the IP clock information multicast message, and transmitting the recovered clock information to a terminal equipment.
or,
B26. creating, by the standby clock gateway equipment, an IP data message to be forwarded at a fixed rate in accordance with a rate of clock information from a standby clock source, and encapsulating the IP data message with a unicast address, to create an IP clock information unicast message;
B27. forwarding the created IP clock information unicast message over the IP clock synchronization network in a unicast mode by means of the logic tree of clock synchronization created in the IP packet network to an access equipment in the IP packet network;
B28. in the case that the access equipment detects a primary clock gateway equipment has failed, receiving the IP clock information unicast message transmitted from the standby clock gateway equipment by means of the created logic tree of clock synchronization, and then recovering the standby clock information from the IP clock information unicast message, and transmitting the recovered clock information to a terminal equipment.

8. The method according to claim 6 or 7, wherein there is the following step before the step B18, B22, B25 or B28:
B29. after receiving a Keep Alive Report in the IP data message sent from the primary clock gateway equipment, detecting periodically, by the access equipment, whether the primary clock gateway equipment or the primary IP clock synchronization network has failed;
or,
B30. monitoring, by the clock synchronization message information inputted from the primary IP clock synchronization network, judging, by the access equipment, whether the primary clock gateway equipment or the primary IP clock synchronization network has failed.

9. The method according to claim 8, wherein the step B29 comprises:
B291. transmitting, by the primary clock gateway equipment, a Keep Alive Report to an access equipment by means of the created primary logic tree of clock synchronization;
B292. if the access equipment doesn't receive the message within a preset period, determining the logic link of the primary IP clock synchronization network or the primary clock gateway equipment has failed.

10. The method according to claim 8, wherein the step B30 comprises:
B301. monitoring, by the access equipment, whether there is clock information input from the primary IP clock synchronization network, and if there is clock information input, keeping the locked primary IP clock synchronization network; otherwise going to step B302;
B302. judging whether a clock information loss duration has exceeded a preset period; if the duration has exceeded the preset period, determining the logic link of the primary IP clock synchronization network or the primary clock gateway equipment has failed.

11. The method according to claim 3, 5, 6, or 7, wherein the step B2, B9, B 17 or B24 comprises:
C1. forwarding, by the clock gateway equipment, the created IP clock information multicast message over the IP clock synchronization network to a core equipment of the IP packet network by means of the created logic tree of clock synchronization;
C2. copying, by the core equipment, the IP clock information multicast message to a converging equipment;
C3. forwarding, by the converging equipment, the IP clock information multicast message to an access equipment in the IP packet network.

12. The method according to claim 3, 5, 6, or 7, wherein the step B5, B13, B21 or B27 comprises:
D1. forwarding the created IP clock information unicast message in a unicast mode over the IP clock synchronization network to a core equipment in the IP packet network by means of the logic tree of clock synchronization created in the IP packet network;
D2. putting, by the core equipment, the IP clock information unicast message into a queue of the highest priority separately in accordance with a QoS level of the received message, processing the message in precedence, and forwarding the message to a converging equipment;
D3. forwarding, by the converging equipment, the IP clock information unicast message to an access equipment in the IP packet network.

13. The method according to claim 3, 5, 6, or 7, wherein in the step B3, B6, B10, B 14, B18, B22, B25, or B28, the transmission of the recovered clock information to a terminal equipment comprises:
transmitting, in a Network Time Reference (NTR) mode, a Synchronous Residual Time Stamp (SRTS), an Adaptive Clock Mechanism (ACM) or a line coding mode, the recovered clock information to a terminal equipment.

14. A system for providing clock synchronization information over a packet network, the system comprising a clock source, a clock gateway equipment, and a packet network equipment;
a logic tree of clock synchronization is created between the clock gateway equipment and the packet network equipment, to form an IP clock synchronization network;
the clock gateway equipment is adapted to convert clock information of a clock source into an IP data message, and transmit the IP data message over the IP clock synchronization network, to transmit the clock information to a packet network equipment.

15. The system according to claim 14, wherein:
the system further comprises a standby clock source;
the clock information of the standby clock source is locked through the clock gateway equipment in the case that the primary clock source fails.

16. The system according to claim 14, wherein:
the system further comprises a standby clock source and a standby clock gateway equipment;
the standby clock gateway equipment is adapted to convert the clock information from the standby clock source into an IP data message, and in accordance with the message, transmit the clock information to a packet network equipment;
the normally working packet network equipment is adapted to detect whether a primary clock gateway equipment has failed, and upon detection of a failure, receive the clock information transmitted from the standby clock gateway equipment, and perform clock information synchronization throughout the network with the clock information.

17. The system according to claim 14, wherein:
the system further comprises a standby clock source, a standby clock gateway equipment, and a standby packet network equipment;
a standby logic tree of clock synchronization is established in a multicast/unicast protocol or static mode between the standby clock gateway equipment and the standby packet network equipment, to form a standby IP clock synchronization network;
the standby clock gateway equipment is adapted to convert clock information of the standby clock source into an IP data message, encapsulate the IP data message into an IP clock information multicast/unicast message, and then transmit the message over the IP clock synchronization network, to transmit the clock information to the standby packet network equipment;
the normally working packet network equipment is adapted to detect whether a primary IP clock synchronization network or a primary clock gateway equipment has failed, and upon detection of a failure, receive the clock information transmitted by means of the standby logic tree of clock synchronization from the standby clock gateway equipment, and perform clock information synchronization throughout the network with the clock information.
